# EUROPEAN PATENT SPECIFICATION

(11) **EP 3 221 918 B1**
(45) Date of publication and mention of the grant of the patent: **13.01.2021**
(21) Application number: 15861829.8
(22) Date of filing: 13.05.2015
(51) Int. Cl.: C25C 1/18, H01M 10/54, C25C 7/00

(54) **METHOD FOR SMELTERLESS RECYCLING OF LEAD ACID BATTERIES**
VERFAHREN ZUM SCHMELZUNGSLOSEN RECYCLING VON BLEISÄUREBATTERIEN
PROCÉDÉ POUR LE RECYCLAGE SANS FONDERIE D'ACCUMULATEURS AU PLOMB

(30) Priority: 18.11.2014 WO PCT/US2014/066142
(43) Date of publication of application: 27.09.2017
(73) Proprietor: Aqua Metals Inc., Oakland, California 94606 (US)
(72) Inventor: DOUGHERTY, Brian, Emeryville, California 94608 (US); KING, Michael John, Oakland, California 94606 (US); CLARKE, Robert Lewis, Orinda, California 94563 (US); CLARKE, Stephen R., Orinda, California 94563 (US); HURWITZ, Michael David, Alameda, California 94501 (US)
(74) Representative: Kador & Partner PartG mbB
(86) International application number: PCT/US2015/030626
(87) International publication number: WO 2016/081030

(56) References cited:
- WO-A1-92/14866
- WO-A1-2013/152260
- FR-A1- 2 207 997
- US-A- 3 772 003
- US-A- 4 650 553
- US-A- 5 520 794
- US-A1- 2006 091 017
- US-A1- 2014 131 220
- Nguyen Thi ET AL: "MORE ENVIRONMENTAL FRIENDLY METHOD OF LEAD RECYCLING FROM WASTE BATTERY PASTE - AN ELECTROCHEMICAL INVESTIGATION", Annual Report of FY 2002, The core University program between Japan Society for the Promotion of Science (JSPS) and National Centre for Natural Sciencd and Technology (NCST), 1 January 2003 (2003-01-01), pages 38-45, XP055329652, Retrieved from the Internet: URL:http://ir.library.osaka-u.ac.jp/dspace /bitstream/11094/12919/1/arfyjsps2002_038. pdf [retrieved on 2016-12-15]

## Description

This application claims priority to PCT Application No. PCT/US14/66I42, filed November 18, 2014.

### Field of the Invention

The field of the invention is recycling of lead acid batteries, especially as it relates to devices and methods that utilize aqueous solutions and do not require smelting and that can be performed in continuous fashion.

### Background of the Invention

The background description includes information that may be useful in understanding the present invention. It is not an admission that any of the information provided herein is prior art or relevant to the presently claimed invention, or that any publication specifically or implicitly referenced is prior art.

Lead acid batteries (LABs) are the single largest class of batteries used today. They are essential for applications ranging from starting automobile engines, providing emergency back-up power for data centers, and powering industrial and recreational vehicles such as fork lift trucks and golf carts. Unlike any other battery type, LABs are almost 100% recycled and this feature puts lead as the single most recycled commodity. While LAB production is increasing at an average rate of about 5% per year globally, production of new lead from ore is becoming increasingly difficult as lead rich ore deposits as depleted. Not surprisingly, new and more efficient methods for lead recycling are urgently needed.

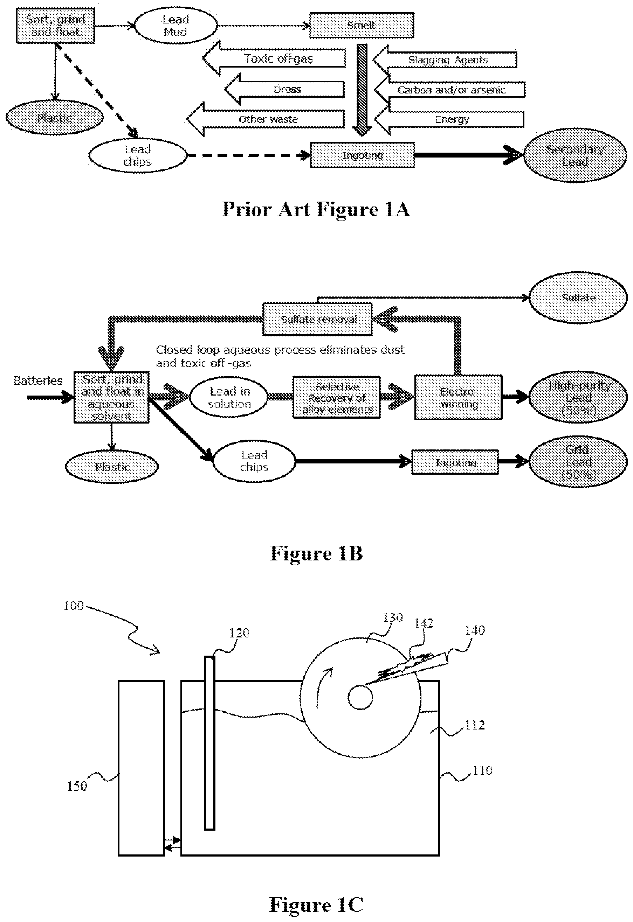

Unfortunately, all or almost all of the current lead recycling from LABs is still based on lead smelting technology, originally developed over 2000 years ago to produce lead from ore bodies. Lead smelting is a pyro-metallurgical process in which lead, lead oxides, and other lead compounds are heated to about 1600 °F and then mixed with various reducing agents to remove oxides, sulfates, and other non-lead materials. Prior Art Figure 1 depicts a typical smelting operation starting with ground up LAB materials.

Unfortunately, lead smelting is a highly polluting process, generating significant airborne waste (e.g., lead dust, CO₂, arsenic, SO₂), solid waste (lead containing slag), and liquid waste (e.g., sulfuric acid, arsenic salts), and pollution issues have forced the closure of many smelters in the US and other Western countries. Migration and expansion of smelters in less regulated countries has resulted in large scale pollution and high levels of human lead contamination.

To complicate matters, obtaining permits for lead smelters has become increasingly difficult, and smelting plants are generally expensive to build and operate. Consequently, profitable operation of smelters is a function of scale. As such, there is a drive towards larger and more centralized smelters, which is at odds with the logistics of the LAB industry that favors distributed recycling and production located close to concentrations of LAB use. As a result, only the largest LAB producing companies have been able to justify and operate smelters while other companies rely on secondary lead producers to recycle their batteries and supply them with lead. This can make it difficult for LAB producers to meet increasingly stringent requirements for "cradle to grave" control of their products, such as the international standard ISO 14000.

On a more technical level, it should be appreciated that lead smelting was developed to produce lead from lead ore (primarily Galena or lead sulfide). However, the chemistry of recycled lead acid batteries is vastly different to the chemistry of lead smelting of ores. As such lead smelting is a fundamentally inefficient process for lead recycling.

Various efforts have been made to move away from smelting operations and to use more environmentally friendly solutions. For example, United States Patent No. 4,927,510 (to Olper and Fracchia) teaches recovering in pure metal form substantially all lead from battery sludge after a desulfurization process. Unfortunately, the '510 patent still requires use of a fluorine containing electrolyte, which is equally problematic.

To overcome some of the difficulties associated with fluorine containing electrolyte, desulfurized lead active materials have been dissolved in methane sulfonic acid as described in United States Patent No. 5,262,020 (to Masante and Serracane) and United States Patent No. 5,520,794 (to Gernon). However, as lead sulfate is rather poorly soluble in methane sulfonic acid, upstream pre-desulfurization is still necessary and residual insoluble materials typically reduced the overall yield to an economically unattractive process. To improve at least some of the aspects associated with lead sulfate, oxygen and/or ferric methane sulfonate can be added as described in International Patent Application Publication No. WO 2014/076544 (to Fassbender et al), or mixed oxides can be produced as taught in International Patent Application Publication No. WO 2014/076547 (to Fassbender et al). However, despite the improved yield, several disadvantages nevertheless remain. Among other things, solvent reuse in these processes often requires additional effort, and residual sulfates are still lost as waste product. Moreover, during process upset conditions or power outage (which is not uncommon in electrolytic lead recovery), the plated metallic lead will dissolve back into the electrolyte in conventional electrolytic recovery operations, unless the cathode was removed and the lead peeled off, rendering batch operation at best problematic.

Thus, even though numerous methods for lead recycling are known in the art, all or almost all of them, suffer from one or more disadvantages. Therefore, there is still a need for improved devices and method for smelterless recycling of lead acid batteries, especially in a continuous manner.

### Summary of The Invention

The invention is solely defined by the appended claims.

In one embodiment of the disclosed concept, lead materials are recovered from lead acid batteries by contacting active material lead with an electroprocessing solvent to generate an electroprocessing solvent with solvate lead ions and solid lead (for example, a lead grid from such a battery). Solid lead is removed from the solvent, and solvated lead ions are reduced on a cathode to provide high purity metallic lead. This reduction of lead ions also regenerates the electroprocessing solvent. In some embodiments sulfur is extracted from the active material lead by treatment with a base, which generates a soluble sulfate. The base is recovered from this soluble sulfate, and is recycled in the process for extraction of sulfate. Suitable electroprocessing solvent include an alkane sulfonic acid, typically between 5% and 50% by weight, and in some embodiments include a chelator in amounts of 0.5% to 20% by weight. In some embodiments high purity lead is removed as lead ions are being reduced, for example by moving the cathode relative to the lead ion enriched electroprocessing solvent. Such high purity lead is in the form of a micro- or nano-porous mixed matrix that has a density of less than 5 g/cm³. Reduction of lead ions provides a regenerated electroprocessing solvent that is recycled into the process by contacting it with lead materials. In some embodiments sulfate and/or metal ions other than lead are removed from such regenerated electroprocessing solvent. In still other embodiments the steps of providing lead materials, contacting the lead materials, removing at least some of the grid lead, and reducing lead ions are performed to allow processing in a continuous fashion.

Another embodiment of the disclosed concept is a method for continuously producing high quality lead (e.g. 98% or greater purity) from lead ions solvated in an electroprocessing solvent. A cathode is used to reduce lead ions in such a solvent to form an adherent high purity lead while regenerating the electroprocessing solvent. The high purity lead is removed from one part of the cathode while lead ions are reduced on another part of the cathode, for example by moving the cathode relative to the electroprocessing solvent. The regenerated solvent, in turn, is used treat lead materials to produce a lead ion enriched electroprocessing solvent suitable for producing high quality lead. In some embodiments sulfur is extracted from active material lead using a base, to generate a soluble sulfate salt. The base used for sulfur removal is recovered from the soluble sulfate salt, and this recycled base re-used to extract sulfur from active material lead. Suitable electroprocessing solvents include an alkane sulfonic acid in an amount between 5% and 50% by weight. In some embodiments electroprocessing solvents include a chelator in an amount between 0.5% and 20% by weight. The high purity lead is produced as a micro- or nanoporous mixed matrix with a density of less than 5 g/cm3, and is collected from the cathode in a non-peeling fashion by a harvester positioned proximal to the cathode. In some embodiments sulfate and/or metal ions other than lead are removed from the regenerated electroprocessing solvent.

Another embodiment of the disclosed concept is a production intermediate that includes an aqueous solution of an alkane sulfonic acid (at between 5% and 50% by weight), dissolved, base-treated active material lead, and undissolved, solid grid lead. Such base-treated active material lead is essentially or completely desulfurized. In some embodiments the alkane sulfonic acid is methane sulfonic acid and is present at between 15% and 30% by weight.

Another embodiment of the disclosed concept is a lead composition that includes metallic lead with a purity of 98% or greater, molecular hydrogen, and an electroprocessing solvent that is free of chelators. The lead composition is in the form of a micro- or nano-porous mixed matrix with a density of less than 5 g/cm³, and in some instances less than 3 g/cm³. In some embodiments the electroprocessing solvent includes an alkane sulfonic acid (for example, methane sulfonic acid) at a concentration of between 5% and 50% by weight.

Another embodiment of the disclosed concept is an electrolyzer for producing high quality lead using an electroprocessing solvent. Such an electrolyzer includes an anode and a cathode in an electrodeposition cell that places the anode and cathode (in some instances without an intervening separator) in contact with a lead ion enriched electroprocessing solvent. For example, the cathode can be a rotating disc that moves at a speed that allows the formation of adherent high purity lead as a micro- or nano-porous mixed matrix on the cathode. In some embodiments the cathode can move relative to the electroprocessing solvent. It also includes a lead harvester that is positioned proximal to a surface of the cathode and that is shaped and arranged to collect high purity lead that is adherent to the cathode's surface in a non-peeling manner. In some embodiments the anode is made from titanium and is coated with ruthenium oxide and the cathode is aluminum. In some embodiments the electrolyzer also includes a solvent conditioning unit that is configured to remove sulfate and/or metal ions other than lead from the electrodeposition solvent. In other embodiments the electrolyzer includes an electrochemical cell containing a soluble sulfate salt, and that is configured to produce a sulfuric acid and a base.

Another embodiment of the disclosed concept is a method of recycling a lead acid battery. In such a method a lead paste that includes lead sulfate is obtained from the battery and contacted with a base to for a supernatant and a lead hydroxide containing precipitate. The supernatant is treated in an electrochemical cell to generate sulfuric acid and a regenerated base. The precipitate is treated with a solvent to generate a lead ion solution, which is in turn contacted with a collection cathode. An electrical potential is applied to the collection cathode to reduce the lead ions, depositing metallic lead on the collection cathode while regenerating the solvent Lead is collected from the collection cathode while the regenerated base is recycled in the process to treat additional lead paste. Similarly, the regenerated solvent is used to treat the lead hydroxide containing precipitate formed from the additional lead paste. In some embodiments the solvent solution includes an alkane sulfonic acid and does not include a chelator.

Various objects, features, aspects and advantages of the inventive subject matter will become more apparent from the following detailed description of preferred embodiments, along with the accompanying drawing figures in which like numerals represent like components.

### Brief Description of the Drawings

**Prior** **Figure 1A** is a schematic of a conventional smelting process for ground lead acid battery materials.
**Figure 1B** is an exemplary schematic of a smelter-less process for ground lead acid battery.
**Figure 1C** is an exemplary schematic of an electrolyzer.
**Figure 2** is an exemplary schematic of a closed loop smelter-less process for recovery of materials from lead acid batteries.
**Figure 3A** is an exemplary experimental set up for a process according to Figure 1B.
**Figure 3B** is a detail view for an electrolyzer with a disc-shaped cathode and a lead product in a micro- or nanoporous mixed matrix.
**Figures 4A-4C** are graphs illustrating current efficiencies (CE) as a function of lead concentration (4A, 4C) and current density (4B).

### Detailed Description

The inventors have now discovered that lead acid battery materials can be recycled in a conceptually simple, yet effective manner where all lead materials are treated with an electroprocessing solvent that helps clean grid lead materials, and especially grids and contacts/bus bars. In some embodiments the electroprocessing solvent dissolves all active lead materials, including lead oxide and lead sulfate. In other embodiments sulfate is exctracted from active lead materials by base treatment prior to solvation of lead species in the electroprocessing solvent, providing a base treated active material that is desulfurized or essentially desulfurized (i.e. less than 1% sulfate content). Such an electroprocessing solvents can, upon loading with lead ions due to active materials dissolution, be subjected to an electrodeposition process that allows continuous production of high-purity metallic lead while regenerating the electroprocessing solvent for a further cycle. In addition, sulfate recovered by base treatment can be treated in an electrochemical cell to regenerate the base for a further cycle, thereby providing a closed loop system.

With respect to continuous lead recovery it should be especially appreciated that heretofore known processes would plate metallic lead from an electrolyte onto a cathode in an acidic solution. During process upset conditions or power outages (which are not uncommon in electrolytic lead recovery), the plated metallic lead would dissolve back into the electrolyte unless the cathode was removed and the lead removed. Still further, conventional electrolytic lead recovery processes deposit or plate lead as a strongly bound film to the cathode, which makes removal of the lead labor intensive. For example, lead can be peeled from the cathode as thin, plated sheets that adhere to the cathode's surface. However, such sheets have the tendency to break or flake, and lead removal is thus inefficient and/or cumbersome. In contrast, the lead recovery methods according to the inventive subject matter will allow recovery of high purity lead in a non-peeling manner. For example, the lead product can be removed from the cathode as a non-film material (e.g., as amorphous micro- or nanoporous mixed matrix) using a simple wiper or scraper (preferably where the scraper does not directly contact the cathode but is in close proximity, e.g., between 0.5 and 5 mm) as a removal tool, which in turn allows continuous removal on one portion of the cathode while reduction is performed at another portion of the cathode.

According to the invention the electroprocessing solvent includes an alkane sulfonic acid (preferably methanesulfonic acid or MSA) but does not include a chelator. Because of utilizing such a chelator-free solvent, active lead materials are treated with a base (for example, LiOH, NaOH, and/or KOH) to generate soluble sulfate salts and insoluble lead hydroxide from the lead sulfate component of the active lead material. Such a base-treated active lead material includes lead oxides and lead hydroxide that can be collected as a lead containing precipitate. The lead oxides and lead hydroxide of the lead containing precipitate are soluble in alkane sulfonic acids (such as MSA); as a result, in such a method the use of a chelating agent with the alkane sulfonic acid is not necessary.

The soluble sulfate salt generated by base treatment is readily collected as a supernatant and can be processed (for example in an electrochemical cell) to regenerate the base species used for treatment of the active lead material. This advantageously closes the loop for base usage in such a process. Treatment of the supernatant in an electrochemical cell also generates sulfuric acid, which has numerous industrial uses (including production of new lead acid batteries).

Additionally, the inventors also unexpectedly noted that electroprocessing solvents comprising an alkane sulfonic acid with or without a chelator (such as MSA or MSA + EDTA) are suitable for electrolytic recovery of lead on a cathode. Notably, such recovery could even be performed in an electrodeposition cell without a separator and as such significantly simplified the design of suitable electrolyzers. Such finding was particularly unexpected as prior reports on lead acid batteries haaving MSA as electrolyte (SLABS) noted that layers of an insoluble form of PbO₂ would form on the anode, which effectively shuts down the SLAB battery.

While EDTA has been used to preferentially dissolve lead salts and to support lead electrochemical plating from solution as described in United States Patent No. 7,368,043 (to Mohanta et al), such plating requires a complex and expensive electrochemical cell with a membrane separator to inhibit destruction of the EDTA. Still further, such process also operates at high pH (caustic pH) and it would be impractical to convert all of the active material from a LAB to caustic on a commercial basis. In contrast, EDTA in combination with the MSA at acidic pH not only increased solubility of most lead species, and especially lead sulfates, but also allowed for reduction of ionic lead to an adherent, but not plated form Similarly, reduction of ionic lead from MSA in the absence of chelators (*i.e.* following base treatment of active lead materials and MSA solvation of precipitated lead species) also permitted recovery of metallic lead as an adherent, but not plated, form.

As used herein, the terms "adherent" or "weakly associated" in conjunction with metallic lead that was formed by reduction of ionic lead refers to a form of lead that is not a coherent film over the surface of the cathode, but that is amorphous and can be wiped off the cathode. In other words, a weakly associated or adherent lead product does not form in a macroscopic dimension intermetallic bonds between the cathode and the lead product and will therefore not form a coherent lead film on the cathode. For example, by observation in most experiments (e.g., see experimental description below), lead formed in a spongy low density layer that was loosely attached to the cathode, floated off a static plate cathode, and could be washed off the surface of a rotating cathode if electrolyte circulation was too aggressive. Moreover, alkane sulfonic acid without chelator (e.g., MSA) and the combination of the alkane sulfonic acid and chelator (e.g., MSA + EDTA) allowed for stable electrolytic recovery of lead without significant destruction of the alkane sulfonic acid (e.g., MSA) or the chelator (e.g., EDTA). This regeneration of both alkane sulfonic acid or alkane sulfonic acid + chelator electroprocessing solvents permits their re-use in a successive cycle of their respective proomes, advantageously closing the loop for electroprocessíng solvent utilization.

Therefore, it should be appreciated that lead acid batteries and battery materials can be processed as exemplarily depicted in Figure 1B by first enshing or grinding the battery or battery materials to a relatively small size (e.g., average partiele size betwen 0.1 and 1 on, or between 1 and 3 cm, or between 3 and 5 cm, or larger, in the largest dimension), followed by removal of plastic parts and battery acid (which can be further recycled or processed). The so obtained lead scrap material will predominantly contain grid lead and active material lead, which is then treated in a container with the electroprocessing solvent to clean the grid lead and to dissolve the active material lead. After a suitable period of lead dissolution (or upon complete dissolution of the active material lead), remaining cleaned solid grid lead can be extracted from the solution, optionally washed, and pressed into lead chips/ingots to so yield grid lead that can be directly reused or further refined.

The so obtained lead ion-enriched solution may then be treated to remove other non-lead ions (e.g., zinc, calcium, tin, silver, etc.), which may be performed using a selective ion exchange resin, other selective adsorbent, selective electrodeposition, liquid chromatography and/or precipitation. Of course, it should be recognized that such step may also be performed after electrolytic recovery of lead. Regardless of any optional pre-processing, the lead ion-enriched solution is then fed to an electrolyzer to recover the lead in metallic form. While any type of electrolyzer is generally contemplated, especially preferred electrolyzers will include those without separator or membrane between the cathode and the anode, and with a cathode that moves relative to the electrolyte. After reduction of the lead ions, the process will yield a high-purity lead (i.e., at least 98% purity, or at least 99% purity, or at least 99.5% purity). Where the electrolyzer has one or more moving electrodes, and especially rotating disk electrodes, lead is being deposited as adherent but non-film forming lead.

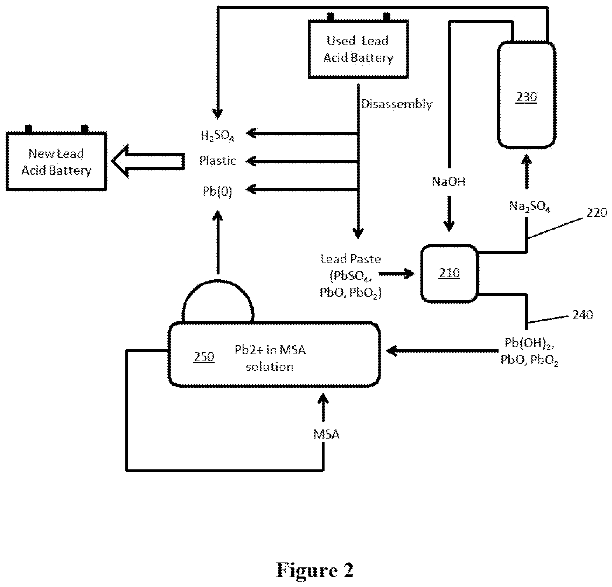

An example of a method of the inventive concept that does not utilize a chelator is depicted schematically in Figure 2. As shown, a used lead acid battery is initially disassembled. Such disassembly can be ordered, for example by splitting or cutting along edges and/or seems of the case and segregation of solid and liquid components). Alternatively, disassembly can be carried out by crushing, grinding, fragmenting, and/or shredding to provide particulates falling within the size ranges described above. Liquid and solid (e.g. plastic, metallic lead, lead paste) components can be separated by deeamaiktn and/or density. Certain components, such as sulfuric acid, plastic, and metallic lead can be recovered directly a form that is substantially ready for re-use, Insoluble lead paste, containing active material lead species (e.g. lead sulfate and lead oxides) is collected for further treatment in a base treatment vessel 210.

Within the base treatment vessel 210 the lead paste is contacted with a base (NaOH in this example) that acts to generated lead hydroxide and a soluble sulfate salt from the lead sulfate component. Suitable bases include metal hydroxides (Mₓ(OH)_{y}) for which the corresponding metal sulfate Mₐ(SO₄)_{b}) is soluble. Suitable examples include Group I metal hydroxides (such as LiOH, NaOH, and KOH). Other bases that provide soluble sulfate salts (*i.e.* soluble at greater than or equal to 10, 25, 50, 75, 100, 200, 400, 600, or 800 or more g/L) and insoluble (*i.e.* insoluble at 10, 3, 1, 0.3, 0.1, 0.03, 0.01 or less g/L) lead salts on reaction with Pb(SO₄), for example carbonates (such as Na₂(CO₃) and K₂(CO₃)), are also suitable. It should also be appreciated that such bases can be used to rinse or otherwise clean plastic and metallic lead components recovered from a lead acid battery in order to dislodge and recover adhering lead sulfate containing paste, as part of the disassembly process.

From the base treatment vessel 210 a supernatant 220 containing a soluble sulfate salt (depicted as sodium sulfate in this example) and a precipitate 240 containing lead hydroxide and lead oxides are separated and individually recovered. Separation of the sulfate-containing supernatant 220 from the lead-containing precipitate 240 can be performed by any suitable method. For example, the supernatant 220 can be separated from the precipitate 240 by settling, centrifugal separation (for example in a hydrocyclone), and/or filtration. Suitable filters include filtration membranes and meshes, bed filters, press filters, and belt filters. Preferred separation methods are selected to efficiently separate the solid precipitate 240 from the supernatant 220 while facilitating recovery of the precipitate for subsequent processing.

The supernatant 220 can be processed to generate sulfuric acid and regenerate the base used in the treatment of the lead paste recovered from the recycled battery. This can be accomplished through the use of an electrochemical cell 230. For example, when NaOH is used as the base, plating of sodium metal onto me cathode results in the formation of NaOH on reaction with water. This regenerated NaOH can be recovered and returned to the base treatment vessel 210 for extraction of lead paste as part of a closed loop system. Similarly H₂SO₄ can be recovered from the anode, and subsequently used in any number of industrial processes. In a preferred embodiment, the recovered sulfiiric acid is utilized in the manufacture of lead acid batteries. Any suitable configuration of electrochemical cells can be used. Ina preferred embodiment the electrochemical cell is configured as a channel containing a segmented anode and a segmented cathode arranged along its length, where individual electrode segment pairs are individually controllable (as described in United States Patent No. 8,580,414, to Clarke). Such an arrangement advantageously permits single-pass processing at high efficiency.

Precipitate 240 recovered from the base treatment vessel 210 (i.e. base treated active material lead) is dissolved in an alkane sulfonic acid (in this example, MSA). It should be appreciated that, with the removal of sulfate from the active material lead species, a chelator is not required when suitable base treatment of the lead paste is utilized. MSA containing solvated lead ions is treated in an electrodeposition cell 250, as described above. Depletion of lead ions from the alkane sulfonic acid solvent effectively regenerates the solvent, permitting its re-use in solvating the base treated active material lead. Metallic lead (Pb(0) collected by electrodeposition can be collected from a collection cathode of the electrodeposition cell 250 (for example, by scraping) and utilized in any number of industrial processes. As shown in Figure 2, the materials recovered from an old lead acid battery can be utilized in the construction of a new lead acid battery with no or essentially no net consumption of either base or alkane sulfonic acid solvent, providing a closed loop system for recycling of such batteries that does not utilize a smelting step. Further aspects of contemplated integrated processes and devices are taught in copending US provisional application with the title "Closed Loop Systems And Methods For Recycling Lead Acid Batteries", filed on May 13, 2015.

Surprisingly, the inventors discovered that the metallic lead was recovered from processes of the inventive concept in the form of a micro- or nanoporous mixed matrix in which the lead formed micro- or nanometer sized structures (typically needles/wires) that trapped some of the electroprocessing/electrodeposition solvent and a substantial quantity of molecular hydrogen (i.e., H₂). Most notably, such a matrix had a black appearance and a remarkably low bulk density. Indeed, in most of the experimental test runs the matrix was observed to float on the solvent and had a density of less than 1 g/cm3. Upon pressing the matrix or application of other force, the density increased (e.g., 1-3:g/cm3, or 3-5 g/cm3, or higher) and a metallic silvery sheen appeared.

Additionally, it was unexpectedly observed that the reduced lead ions did not form a tightly bonded film on the cathode, but could be readily removed from the cathode by simply wiping the cathode with a material to which the lead could adhere (e.g., plastic, lead-film, etc.). Therefore, lead recovery can be performed in a continuous manner. Particularly where a rotating or reciprocating electrode was employed, lead ions could be reduced one part of an electrode or electrode assembly, while metallic lead can be removed from another part of the electrode or electrode assembly. Especially suitable cathodes and aspects thereof are taught in co-pending US provisional application with the title" Apparatus And Method For Electrodeposition Of Metals On Aluminum Cathodes", filed on May 13, 2015.

As noted above, an electroprocessing solvent can be reused after sufficient quantities of lead had been removed via reduction. It should be recognized that in processes utilizing alkane sulfonic acid + chelator electroprocessing solvents, electrodeposition of metallic lead can results= in the accumulation of sulfate in the solvent Spent electroprocessing solvent could be processed by mechanical processing (e.g., filter, centrifuge, hydrocyclone, etc.) to remove any solids, and/or chemical processing (e.g., by precipitation of sulfates, for example, to produce calcium or strontium sulfate), and/or adsorptive processing (e.g., activated charcoal, ion exchange resin, etc.) can be utilized to reduce or eliminate accumulated sulfate. Thus, electroprocessing solvents utilized in electrodeposition processes can be reused in the next cycle of processing lead materials for alkane sulfonic acid solvent systems.

With respect to the alkane sulfonic acid it should be appreciated that numerous alkane sulfonic acids are deemed suitable for use herein. However, MSA is especially preferred as this compound is environmentally friendly and stable under electrolytic conditions used. However, other suitable alkane sulfonic acids include ethyl sulfonate, proplyene sulfonate, trifluro methyl sulfonate (triflic acid), sulfamic acid, etc. In most circumstances, the MSA or other alkane sulfonic acid will be present in a significant concentration, typically at least 1-5 wt%, more typically 5-15 wt%, even more typically 25-50 wt%, and most typically between 15 and 35 wt% of the electroprocessing solvent. Thus, suitable concentrations will typically be between 5 and 50 wt%, or between 20 and 30 wt% of the electroprocessing solvent. The pH of the electroprocessing solvent is most preferably acidic as noted above, and most typically between pH 5-7, or between pH 1-3, or between pH 3-5. Viewec form a different perspective, the pH of the electroprocessing solvent will be less than or equalor less than 5, equal or less than 3. Suitable solvent are preferably aqueous and will most preferably be prepared from deionized water. However, additional co-solvents are also deemed suitable and include alcohols, various polyols (propylene glycol, polyethylene glycol, etc.), etc.

Of course, it should be noted that the particular size/dimensions of the electrolytic cell may vary considerably and that the specific process conditions and operating parameters will at least in part determine the size and volume of the electrolytic cell. In especially preferred aspects, however, the electrolytic cell is operable without the need for a membrane separator. Viewed from another perspective, the cell need not be separated in fluidly distinct catholyte and anolyte compartments. Moreover, it should be appreciated that the electrolytic cell need only be fluidly coupled to the container in which the lead materials or base-treated active lead materials are being dissolved. Where treatment of the electroprocessing solvent is considered, it should be noted that the type of treatment will determine the location of such treatment unit, and that the skilled artisan will be readily appraised of the suitable location. However, preferred locations are those where treatment is performed on the lead ion-enriched solvent or the at least partially depleted solvent. As used herein, and unless the context dictates otherwise, the term "coupled to" is intended to include both direct coupling (in which two elements that are coupled to each other contact each other) and indirect coupling (in which at least one additional elementis located between the two elements). Therefore, the terms "coupled to" and "copied with" are used synonymously.

It should be appreciated that numerous electrodes are deemed suitable for use herein. Indeed, it should be acted that all conductive materials are considered suitable for use in conjunction with the teachings herein so long as such materials are compatible with the electrochemical conditions use in the process. Therefore, and among other contemplated materials, suitable anodes include various metals, carbon (typically graphite, glassy carbon, or graphene) anodes, matrices comprising at least one polymer and one form of carbon and especially preferred anodes will be titanium anodes, which may be coated with ruthenium oxide (or other metal oxide). Notably, aluminum has been found not to dissolve in the lead-ion enriched electroprocessing solvent and as such aluminum coated with a conducting and non-passivating material such as ruthenium oxide is contemplated as an anode material. Alternatively Magneli Phase sub-oxides of titanium (of the formula TixO(2x-1) where x is an integer between 4 and 11) have been discovered to be stable anode materials in electrolytes of similar composition to the electroprocessing solvent and are contemplated for use as anode materials and passivation resistant coatings on anodes.

More notably, however, the inventors discovered that the lead recovery process, when using the lead ion-enriched electroprocessing solvents disclosed herein, lead to the formation of a low density lead composition that included lead at a very high purity and that included some of the solvent and hydrogen produced at the cathode. Most remarkably, most if not all of the so formed lead composition was black in color, did not plate and bond as an electrochemicany bound film to the cathode, but rather floated onto the surface upon moderate to strong agitation of the solvent. When pressed into a smaller volume, hydrogen and electroprocessing solvent were expelled and the remaining lead returned to a metallic appearance. Unexpectedly, less than 10% (e.g., between 5-9%), more typically less than 7% (e.g., between 2-6%), even more typically less than 5% (e.g., between 1-4%), and most typically less than 3% (e.g., between 0.01-2%) of the total lead formed at the cathode was found as plated and strongly adherent lead on the cathode, while the remainder of the lead remained in the low density form. While not wishing to be bound by any theory or hypothesis, the inventors contemplate that the lead in the low density lead materials formed a micro- or nanoporous mixed-matrix: comprising micrometer or even nanometer-sized lead filaments to form a porous material in which hydrogen and the solvent were flapped.

Upon further study, the inventors noted that low density and high-purity lead could be obtained from multiple cathode materials, reprdim of cathode shape or relative movement of the solvent against the cathode. However, vigorous agitation or movement of the cathode relative to the electroprocessing solvent did simplify 'harvest' the floating low density lead composition. Therefore, and among other suitable choices, preferred cathode materials include various metals, and especially aluminum. Alternatively, carbon (e.g. graphite, diamond like carbon, graphene, etc.,) matrices comprising at least one polymer and one form of carbon, Magneli Phase sub-oxides of titanium (of the formula TixO(2x-1) where x is an integer between 4 and 11) have been discovered to be stable cathodes materials in the electroprocessing solvent and are contemplated for use as cathode surfaces.

While a lack of plating is typically undesirable in all or most electrowinning methods, the inventors now discovered that such lack of plating will enable a continuous lead recycling process in which lead can be continuously removed from the cathode on one segment while additional lead is formed on another segment of the cathode. Removal of the adherent/weakly associated lead is typically done using a mechanical implement (e.g., a wiping surface, blade, or other tool in close proximity to the cathode, etc.), however, removal can also be performed via non-mechanical tools (e.g., via jetting electroprocessing solvent against the cathode, or sparging gas against the cathode, etc.). Moreover, it should be noted that the removal may not use an implement at all, but merely by done by passive release of the low density lead material from the cathode and flotation to the surface of the electrochemical cell (where an overflow weir or harvesting will receive the lead materials).

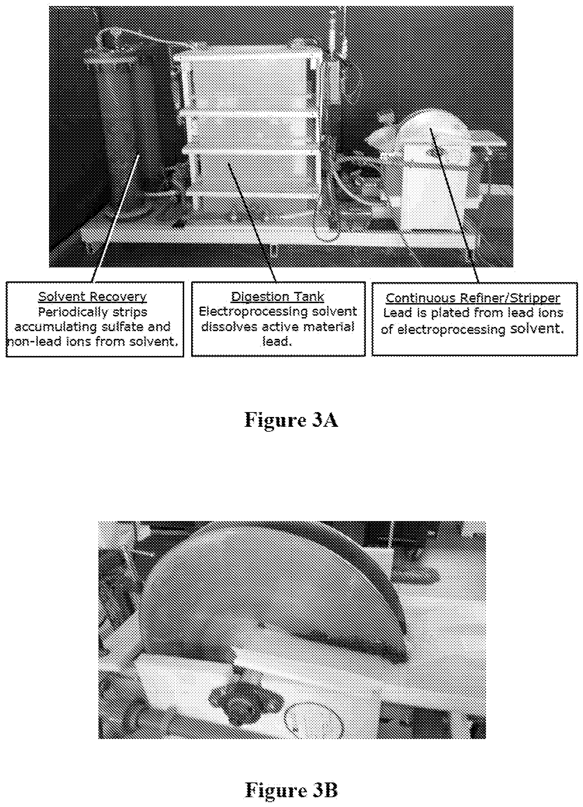

Therefore, in at least some preferred aspects, the cathode comprises one or more disk-shaped aluminum cathodes that are rotatably coupled to the electrolytic cell and that are in close proximity to the cathode(s). Figure 3A is a photograph of a small-scale experimental electrochemical device in which lead acid battery scrap materials (predominantly grid lead and active materials lead) are contacted in a digestion tank. Solid materials are then removed as needed and the lead ion enriched electroprocessing solvent is then fed into the electrolytic cell where low density lead materials are plated on the disk shaped electrode.

In processes (not according to the invention) that utilize an alkane sulfonic acid + chelatar electroprocessing solvent and that do not utlilize a base treatment step for removal of sulfate from the active lead species, at least a portion of the electroprocessing solvent is fed to the recovery unit in which an ion exchange resin and a precipitation stage periodically remove sulfate ions and other non-metal ions.

Figure 3B is a photograph showing a more detailed view of a pair of disk-shaped. cathodes and wiper surface that is proximally positioned to the cathodes to so wipe the low-density lead material from the cathode surface in a non-peeling manner (i.e., without lifting a coherent lead sheet or coherent lead film from the cathode in a pulling motion). Figure 1C is more schematic exemplary depiction of an electrolyzer/electrodeposition unit according to the inventive subject matter where electrolyzer 100 has a cell 110 that contains a lead ion-enriched electroprocessing solvent 112. Anode 120 and rotating disk-shaped cathode 130 are at least partially disposed in the cell to contact the lead ion-eoriched electroprocessing solvent 112 and to promote formation of low density lead product 142 that is taken up by lead harvester 140 (typically a plastic wiper or otherwise proximally positioned surface).

Of course, it should be appreciated that the inventive subject matter is not limited to use of a disk-shaped electrode, but that in fact all electrodes are deemed suitable that allow active (e.g., using a wiping blade or surface) or passive removal (e.g., via bubbles, solvent jetting, or flotation) of high-purity lead from the cathode. Thus, suitable electrodes may be configured as simple plates that may be static relative to the solvent or moved in a reciprocal manner, or electrodes that can be continuously moved and that are configured to allow reduction of lead ions on one portion and lead removal on another portion. For example, suitable electrode configurations include conductive disks, cylinders, spheres, belts, etc. Likewise, it should be recognized that the number of cathodes may vary considerably, and that most typically multiple cathodes are operated in parallel (or serially, especially where the cathodes are static relative to the solvent.

Notably, the inventors realized that cell 110 can be operated without significant anodic destruction (e.g., less than 10% chelator loss per 12 hours of continuous operation of a chelator of an alkane sulfonic acid + chelador electroprocessing solvent, even in the absence a membrane or other separator. Solvent conditioning unit 150 for removal of sulfate is fluidly coupled to the cell to receive solvent and pcovide back conditioned Solvent in embodiments where removal of accumulated sulfate from the electroprocessing solvent is needed. Solvent processing can be performed in numerous manners and may be continuous or batch-wise. Most typically, processing the solvent inchides a step of filtering to remove at least some of the particulates, a step of sulfate removal (e.g., via lime precipitation, reverse osmosis, ion exchange, electro-osmosis, salt splitting liquid chromatography, liquid/liquid extraction etc.,), and/or a step of non-lead metal ion removal (e.g., ion exchange). Where the process is operated in a batch mode, collection of multiple streams of solvent is especially preferred, and a surge or holding tank may therefore be added to the system. On the other hand, where the system is continuously operated, multiple streams may be combined and then processed to reduce redundancy and plot space.

Lastly, with respect to the grid lead recovered from the lead ion-enriched solvent, it should be noted that the grid lead may be washed (for example with base or with an alkane sulfonic acid + chelator solvent), compacted, and ingoted or be further refined to increase purity where desired. Residual plastic materials are preferably collected from the scrapping operation and recycled in a separate process stream using conventional plastic recycling methods.

### Experimental Data and Considerations

All methods described herein can be performed in any suitable order unless otherwise indicated herein or otherwise clearly contradicted by context. The use of any and all examples, or exemplary language (e.g. "such as") provided with respect to certain embodiments herein is intended merely to better illuminate the invention and does not pose a limitation on the scope of the invention otherwise claimed. No language in the specification should be construed as indicating any non-claimed element essential to the practice of the invention.

In a first set of experiments, the inventors investigated the ability of a solvent to digest various components of a lead acid battery and in a second set of experiments to investigate the ability to electroplate or reduce the dissolved lead (optionally after filtration). Digestion of the various components was initially carried out using only MSA in concentrations ranging from 1-50 wt%. At all concentrations the majority of the lead oxides were extremely soluble. However, the inventors did not attempt to isolate and test insoluble forms of PbO₂ in the initial work because it was quickly apparent that lead sulfate (PbSO₄) did not digest very well. Although soluble, the overall concentration of lead sulfate was low (as measured by solution density), the rate of digestion was also slow (upwards of 24 hours), and digestion required agitation and heat. With the addition of disodium ethylenediamine tetraacetic acid (EDTA), both the concentration and digestion rate were vastly improved. The density increased from 1.2 g/cm³ to greater than 2.1 g/ cm³. More importantly and unexpectedly, lead was easily electroplated/reduced from this solution, in acid conditions and without the need for a membrane.

In a set of comparative experiments, the MSA concentration was approximately 25 wt% (+/- 5) MSA in combination with approximately 5 wt% disodium EDTA. For example, a typical solution was made up as follows: 100 L of 98% MSA, 20 kg of disodium EDTA, the remainder of water filled to 450L total volume. However, the actual amounts used may vary by as much as 10%. Notably, this solution was able to digest approximately 33kg of mixed battery materials in a 12 hour period without heating or significant agitation. The starting density was 1.1g/ cm³ and the maximum density achieved was 1.6 g/ cm³. It should be appreciated that some of the EDTA did not dissolve (possibly due to reaching saturation concentration in the acidic solution), and it is estimated that about 2 to 5 kg of the disodium EDTA did not fully dissolve and was captured as tank scaling or on the filters during recirculation. Therefore, in most practical examples, preferred electroprocessing solvents will include 20-30% MSA, 2-8% EDTA, with the remainder deionized water.

Remarkably, the bulk of lead oxide and sulfate are highly soluble in contemplated electroprocessing solvents while metallic lead (and solid lead alloys from lead grids) did not dissolve and was stripped clean of contamination; under most experimental conditions, 60-90% current efficiency was observed with a low voltage needed. Due to selective dissolving of the positive and negative active materials (PAM and NAM), substantially less energy for overall lead recycling is required.

Using a reclamation set up as shown in **Figure 3A****,** and a total swept cathode area of 0,252 m² and a tank size 10 US gallon, the following data in Table 1 and 2 were obtained:

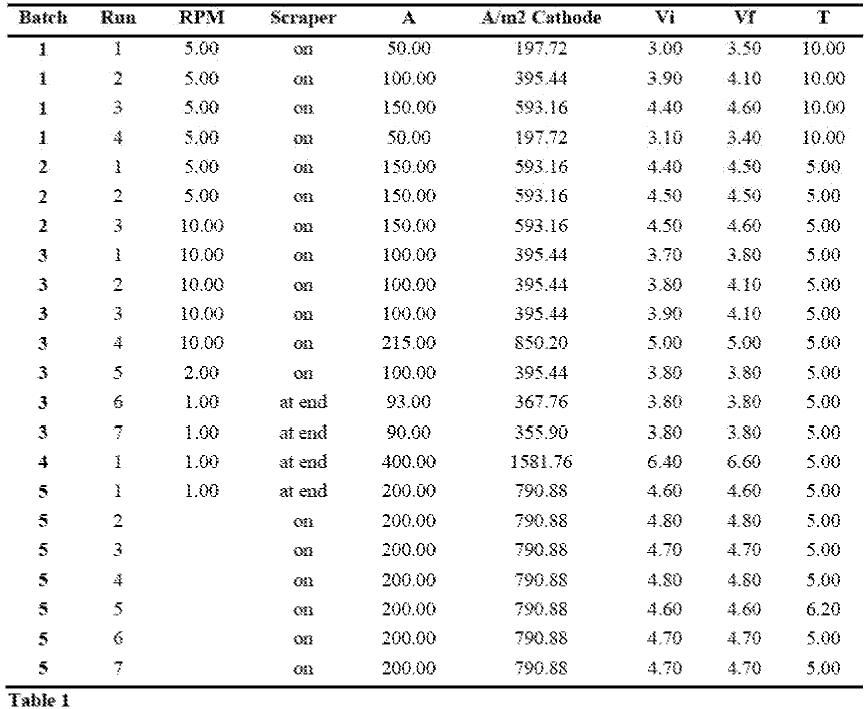

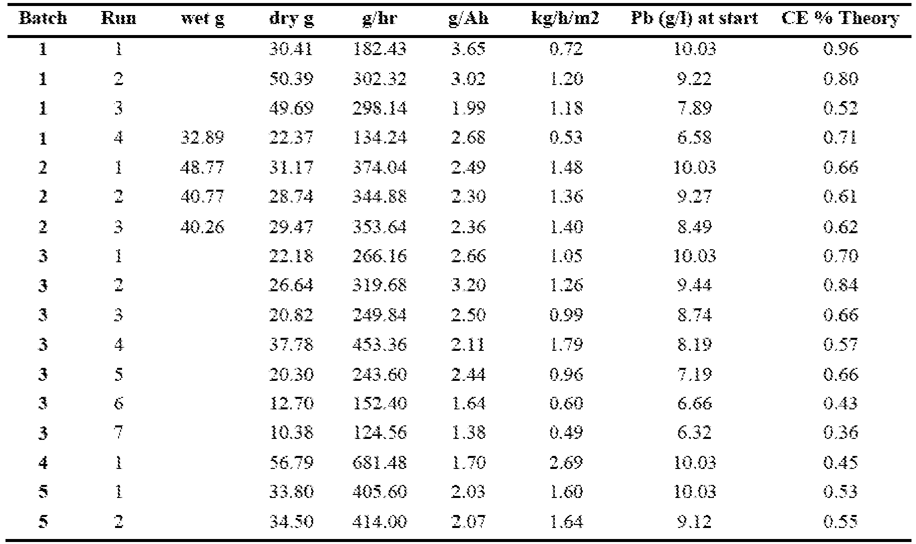

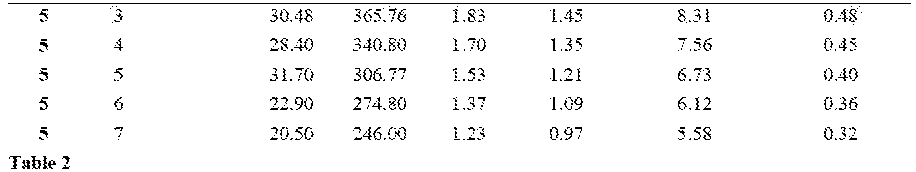

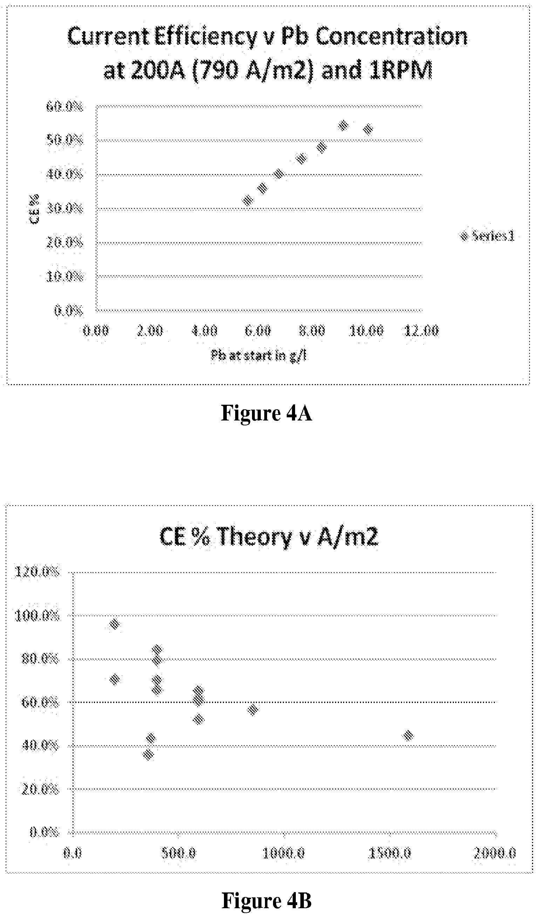

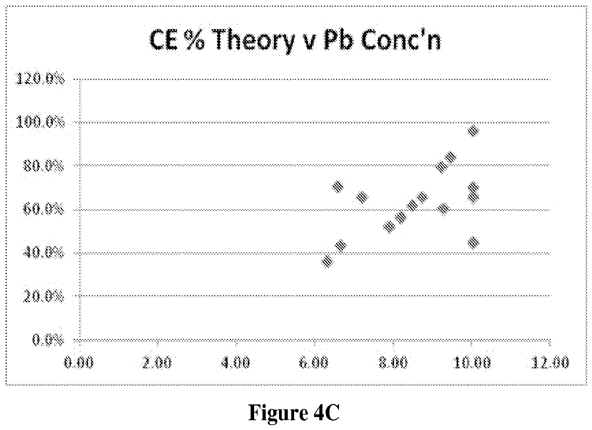

Efficiencies for plating are depictedin **Figures 4A-4C****,** wherein **Figure 4A** shows the current efficiency of lead production as a function of the initial lead concentration at 200A at a current density of 790A/m² and 1 rpm of the disk cathode. **Figure 4B** shows the current efficiency as a function of electrode current density, and **Figure 4C** plotted current efficiency against lead concentration.

As is shown in Table 3 below, high purity lead was obtained at the cathode as a micro- or nanoporous mixed matrix having a density of less than 1 g/cm³ (floating on the surface of the solvent). Moreover, the lead composition did not plate on the cathode as a solid and coherent film but was recovered as amorphous soft and compressible mixed material that contained the methane sulfonic acid and hydrogen.

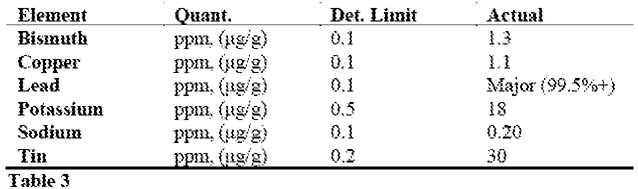

Notably, the so obtained mixed material was different from conventional sponge lead that is normally produced using foaming agents or gas injection during cooling of liquid lead that was previously purified.

## Claims

1. A method of continuously and electrochemically producing high-purity lead from a lead ion-enriched electroprocessing solvent, comprising:
treating active lead materials with a base to generate soluble sulfate salt and base-treated active lead material that includes lead oxides and lead hydroxides;
dissolving the base-treated active lead material in an electroprocessing solvent to so form a lead ion-enriched electroprocessing solvent, wherein the electroprocessing solvent is an alkane sulfonic acid and does not include a chelator;
reducing lead ions in the lead ion-enriched electroprocessing solvent on a cathode to form adherent high-purity lead and a regenerated electroprocessing solvent, wherein the high-purity lead is a micro- or nanoporous mixed matrix and wherein the high-purity lead has a purity of at least 98%;
removing the adherent high-purity lead from one portion of the cathode while lead ions are reduced on another portion of the cathode, wherein the cathode is moved relative to the lead ion-enriched electroprocessing solvent during the step of reducing the lead ions;
contacting at least some of the regenerated electroprocessing solvent with lead materials comprising grid lead and the active lead materials to so produce at least a portion of the lead ion-enriched electroprocessing solvent.

2. The method of claim 1 further comprising a step of recovering the base from the soluble sulfate salt as a recycled base, and utilizing at least a portion of the recycled base in extraction of sulfur from the active lead materials.

3. The method of claim 1 wherein the adherent high-purity lead is removed by a harvester surface in a non-peeling manner, and wherein the harvester surface is positioned proximal to the cathode.

4. The method of claim 1 wherein the adherent high-purity lead has a density of less than 5 g/cm³.

5. The method of claim 1 wherein the electroprocessing solvent comprises the alkane sulfonic acid in an amount of between 5 and 50 wt%.

## Patentansprüche

1. Verfahren zur kontinuierlichen und elektrochemischen Herstellung von hochreinem Blei aus einem mit Bleiionen angereicherten Elektrobehandlungslösungsmittel, umfassend:
Behandeln aktiver Bleimaterialien mit einer Base, um lösliches Sulfatsalz und basenbehandeltes aktives Bleimaterial zu erzeugen, das Bleioxide und Bleihydroxide enthält;
Auflösen des basenbehandelten aktiven Bleimaterials in einem Elektrobehandlungslösungsmittel, um so ein mit Bleiionen angereichertes Elektrobehandlungslösungsmittel zu bilden, wobei das Elektrobehandlungslösungsmittel eine Alkansulfonsäure ist und keinen Chelatbildner enthält;
Reduzieren von Bleiionen in dem mit Bleiionen angereicherten Elektrobehandlungslösungsmittel an einer Kathode, um anhaftendes hochreines Blei und ein regeneriertes Elektrobehandlungslösungsmittel zu bilden, wobei das hochreine Blei eine mikro- oder nanoporöse gemischte Matrix ist und wobei das hochreine Blei eine Reinheit von zumindest 98% aufweist;
Entfernen des anhaftenden hochreinen Bleis von einem Teil der Kathode, während Bleiionen auf einem anderen Teil der Kathode reduziert werden, wobei die Kathode während des Schritts des Reduzierens der Bleiionen relativ zu dem mit Bleiionen angereicherten Elektrobehandlungslösungsmittel bewegt wird;
Inkontaktbringen zumindest eines Teils des regenerierten Elektrobehandlungslösungsmittels mit Bleimaterialien, die Gitterblei und die aktiven Bleimaterialien umfassen, um so zumindest einen Teil des mit Bleiionen angereicherten Elektrobehandlungslösungsmittels zu erzeugen.

2. Verfahren nach Anspruch 1, das des Weiteren einen Schritt des Rückgewinnens der Base aus dem löslichen Sulfatsalz als recycelte Base und des Verwendens von zumindest einem Teil der recycelten Base bei der Extraktion von Schwefel aus den aktiven Bleimaterialien umfasst.

3. Verfahren nach Anspruch 1, wobei das anhaftende hochreine Blei durch eine Harvester-Oberfläche in einer nicht abschälenden Weise entfernt wird, und wobei die Harvester-Oberfläche proximal zu der Kathode angeordnet ist.

4. Verfahren nach Anspruch 1, wobei das anhaftende hochreine Blei eine Dichte von weniger als 5 g/cm³ aufweist.

5. Verfahren nach Anspruch 1, wobei das Elektrobehandlungslösungsmittel die Alkansulfonsäure in einer Menge von zwischen 5 und 50 Gew.-% umfasst.

## Revendications

1. Procédé de production en continu et électrochimique de plomb de haute pureté à partir d'un solvant d'électrotraitement enrichi en ions plomb, comprenant les étapes consistant à :
traiter des materiaux actifs de plomb avec une base pour générer un sel de sulfate soluble et une matière active de plomb traitée à base qui comprend des oxydes et des hydroxydes de plomb ;
dissoudre le matériau de plomb actif traité par une base dans un solvant d'électrotraitement pour former ainsi un solvant d'électrotraitement enrichi en ions plomb, dans lequel le solvant d'électrotraitement est un acide alcane-sulfonique et ne comprend pas de chélateur ;
réduire les ions plomb dans le solvant d'électrotraitement enrichi en ions plomb sur une cathode pour former du plomb de haute pureté adhérent et un solvant d'électrotraitement régénéré, dans lequel le plomb de haute pureté est une matrice mixte micro- ou nanoporeuse et dans lequel le plomb de haute pureté a une pureté d'au moins 98 % ;
enlever le plomb de haute pureté adhérent d'une partie de la cathode pendant que les ions plomb sont réduits sur une autre partie de la cathode, dans lequel la cathode est déplacée par rapport au solvant d'électrotraitement enrichi en ions plomb pendant l'étape de réduction les ions plomb ;
mettre en contact au moins une partie du solvant d'électrotraitement régénéré avec des matériaux de plomb comprenant du plomb de grille et les matériaux de plomb actifs pour produire ainsi au moins une partie du solvant d'électrotraitement enrichi en ions plomb.

2. Procédé selon la revendication 1, comprenant en outre une étape de récupération la base à partir du sel de sulfate soluble en tant que base recyclée, et d'utilisation d'au moins une partie de la base recyclée dans l'extraction de soufre des matériaux de plomb actifs.

3. Procédé selon la revendication 1, dans lequel le plomb de haute pureté adhérent est enlevé par une surface de récolte de manière non pelable, et dans lequel la surface de récolte est positionnée à proximité de la cathode.

4. Procédé selon la revendication 1, dans lequel le plomb de haute pureté adhérent a une densité inférieure à 5 g/cm³.

5. Procédé selon la revendication 1, dans lequel le solvant d'électrotraitement comprend l'acide alcansulfonique en une quantité comprise entre 5 et 50 % en poids.
